# EUROPÄISCHE PATENTSCHRIFT

(11) **EP 3 519 765 B1**
(45) Veröffentlichungstag und Bekanntmachung des Hinweises auf die Patenterteilung: **08.07.2020**
(21) Anmeldenummer: 17800736.5
(22) Anmeldetag: 02.11.2017
(51) Int. Cl.: G01B 17/02

(54) **ULTRASCHALLMESSANORDNUNG UND VERFAHREN ZUM ERFASSEN DER WANDSTÄRKE EINES ROHRS**
ULTRASONIC MEASURING ASSEMBLY AND METHOD FOR DETECTING THE WALL THICKNESS OF A PIPE
SYSTÈME DE MESURE À ULTRASONS ET PROCÉDÉ DE DÉTECTION DE L'ÉPAISSEUR DE PAROI D'UN TUBE

(30) Priorität: 30.11.2016 DE 102016223807
(43) Veröffentlichungstag der Anmeldung: 07.08.2019
(73) Patentinhaber: Siemens Aktiengesellschaft, 80333 München (DE)
(72) Erfinder: CLOSSEN-VON LANKEN SCHULZ, Michael, 47661 Issum (DE); FRANK, Stefan, 45701 Herten (DE); KAHLERT, Philipp, 42653 Solingen (DE); NENDEL, Stefan, 91093 Hessdorf (DE); OBERMAYR, Stefan, 47199 Duisburg (DE)
(86) Internationale Anmeldenummer: PCT/EP2017/078067
(87) Internationale Veröffentlichungsnummer: WO 2018/099682

(56) Entgegenhaltungen:
- EP-A1- 1 772 949
- WO-A1-2009/055110
- CN-Y- 201 053 880
- JP-A- 2012 103 153
- KR-B1- 101 483 551
- US-A1- 2012 167 688

## Beschreibung

Die vorliegende Erfindung betrifft eine Messanordnung zum Erfassen der Wandstärke eines Rohrs, wie im Anspruch 1 definiert.

Ferner betrifft die vorliegende Erfindung ein Verfahren zum Erfassen der Wandstärke eines Rohrs unter Verwendung einer solchen Messanordnung, wie im Anspruch 9 definiert.

Aus dem Stand der Technik ist es grundsätzlich bekannt, die Wandstärke eines Rohrs mittels Ultraschall zu erfassen. In diesem Zusammenhang sind verschiedene Messanordnungen bekannt, die normalerweise einen eine Ultraschallsonde aufnehmenden Basiskörper aufweisen, der an seiner Unterseite eine Basiskörperauflage definiert, die zum Erfassen der Wandstärke eines Rohrs an der Außenseite des Rohrs aufgesetzt wird. Ein solcher Basiskörper mit integriertem Ultraschallsensor wird häufig auch als Prüfkopf bezeichnet. Das Prinzip der Ultraschallmessung ist dem Fachmann bekannt, weshalb hierauf nachfolgend nicht näher eingegangen wird.

Die US 2012/0167688 A1 offenbart eine Messanordnung (100) zum Erfassen der Wandstärke eines Rohrs (101), umfassend einen Prüfkopf (Fig. 2) mit einem eine Ultraschallsonde (210) aufnehmenden Basiskörper (270), der an seiner Unterseite eine Basiskörperauflagefläche (212) definiert, wobei der Prüfkopf zwei Flügelelemente (220, 230) aufweist, die an ihren Unterseiten jeweils eine Flügelelementauflagefläche (262, 263) definieren (siehe auch Fig. 3A und 3B) und an dem Basiskörper derart schwenkbar um sich im Wesentlichen parallel zueinander und in einer Längsrichtung (Fig. 4) erstreckende Schwenkachsen (Fig. 4) gehalten sind, dass die Flügelelementauflageflächen aufeinander zu und voneinander weg bewegt werden können (Fig. 4).

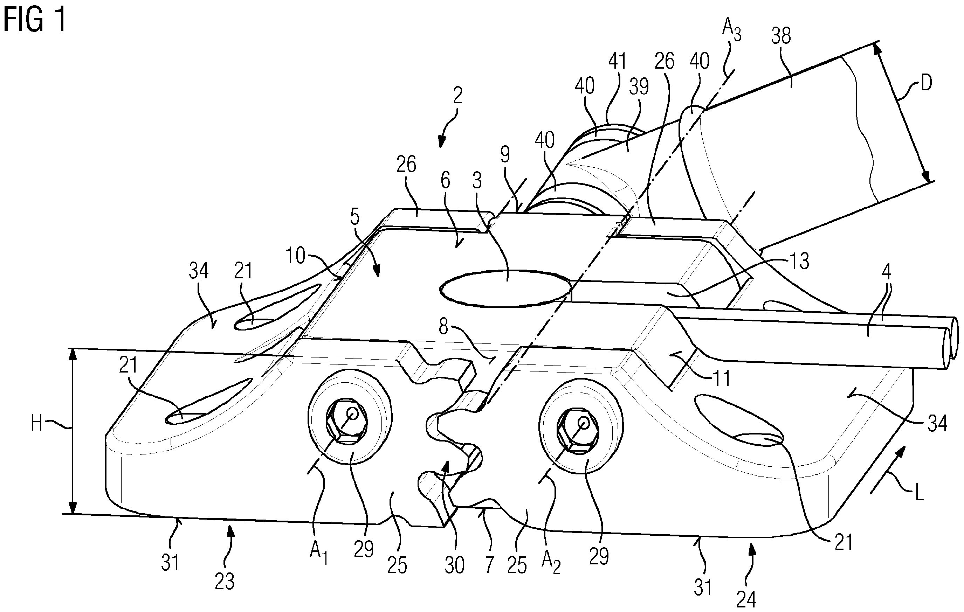

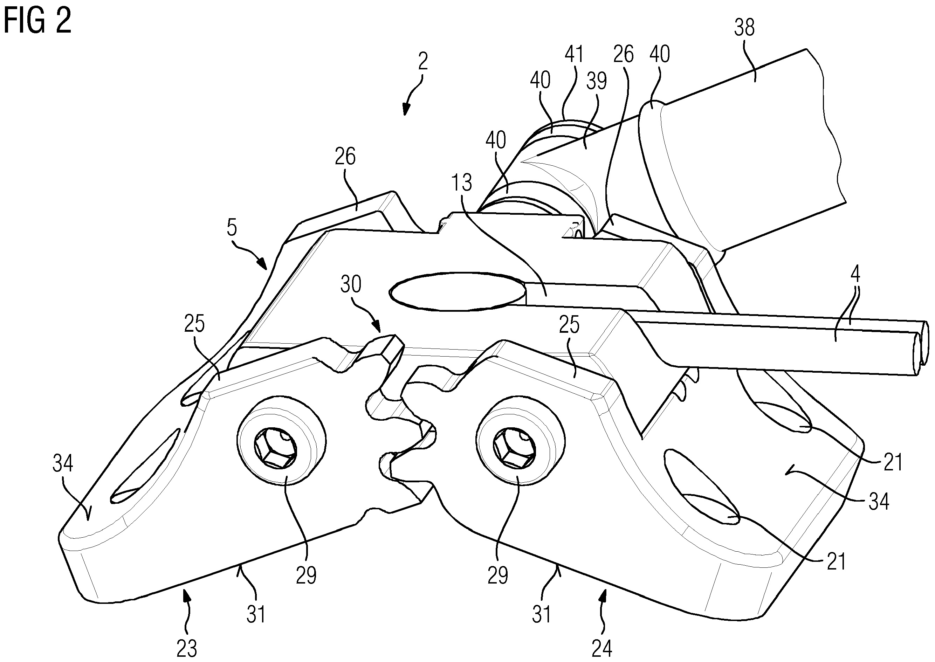

Die CN 201053880 Y offenbart eine Messanordnung (Fig. 1) zum Erfassen der Wandstärke eines Rohrs (8), umfassend einen Prüfkopf (Fig. 2) mit einem eine Messeinrichtung (6) und aufnehmenden Basiskörper (3), der an seiner Unterseite eine Basiskörperauflagefläche (Fig. 1) definiert, wobei der Prüfkopf zwei Flügelelemente (1, 2) aufweist, die an ihren Unterseiten jeweils eine Flügelelementauflagefläche (Fig. 1) definieren und an dem Basiskörper derart schwenkbar um sich im Wesentlichen parallel zueinander und in einer Längsrichtung (Fig. 1, 2) erstreckende Schwenkachsen gehalten sind, dass die Flügelelementauflageflachen aufeinander zu und voneinander weg bewegt werden können.

Ein Problem beim Erfassen der Wandstärke eines Rohrs unter Verwendung einer Messanordnung der eingangs genannten Art besteht aufgrund der Rundung des Rohrs darin, die Basiskörperauflagefläche lotrecht zur Oberfläche des Rohrs zu halten, was zur Erzielung ordnungsgemäßer Messergebnisse erforderlich ist. Bei gut zugänglichen Rohren lässt sich dieses Problem zwar durch entsprechende Schulung des die Messung durchführenden Personals weitestgehend beheben. Bei der Erfassung der Wandstärke schlecht zugänglicher oder nicht einsehbarer Rohrabschnitte ist jedoch auch geschultem Personal die Durchführung ordnungsgemäßer Wandstärkemessungen kaum möglich.

Ausgehend von diesem Stand der Technik ist es eine Aufgabe der vorliegenden Erfindung, eine Messanordnung der eingangs genannten Art bereitzustellen, mit der ein ordnungsgemäßes Positionieren der Basiskörperauflagefläche auf der Oberfläche eines zu prüfenden Rohrs auch ungeschultem Personal problemlos möglich ist. Eine weiterführende Aufgabe der vorliegenden Erfindung besteht ferner darin, eine Messanordnung der eingangs genannten Art zu schaffen, mit der sich auch Wandstärken von schlecht zugänglichen und/oder nicht einsehbaren Rohren oder Rohrabschnitten problemlos erfassen lassen.

Zur Lösung dieser Aufgabe schafft die vorliegende Erfindung eine Messanordnung der eingangs genannten Art, die dadurch gekennzeichnet ist, dass der Prüfkopf zwei Flügelelemente aufweist, die an ihren Unterseiten jeweils eine Flügelelementauflagefläche definieren und an dem Basiskörper derart schwenkbar um sich im Wesentlichen parallel zueinander und in einer Längsrichtung erstreckende Schwenkachsen gehalten sind, dass die Flügelelementauflageflächen aufeinander zu und voneinander weg bewegt werden können, wobei die Flügelelemente derart über Synchronisierungsmittel, insbesondere in Form ineinander greifender Synchronverzahnungen miteinander verbunden sind, dass ihre Schwenkbewegungen um die zugehörigen Schwenkachsen synchron erfolgen. Zur Durchführung einer Wandstärkenmessung eines Rohrs werden sowohl die Basiskörperauflagefläche des Basiskörpers als auch die Flügelelementauflageflächen der beiden Flügelelemente gegen die Oberfläche des Rohrs gedrückt, was dank der synchronisierten Schwenkbewegungen der Flügelelemente um ihre zugehörigen Schwenkachsen dazu führt, dass die Flügelelementauflagefläche automatisch lotrecht auf die Oberfläche des Rohrs aufgesetzt wird. Hieraus resultiert eine sehr genaue und reproduzierbare Positionierung der Ultraschallsonde, ohne dass es besonders geschultem Personal bedarf. Somit wird eine wesentliche Fehlerquelle bei der Wandstärkenmessung eliminiert, was zu sehr zuverlässigen Messergebnissen führt.

Gemäß einer Ausgestaltung der vorliegenden Erfindung ist die Ultraschallsonde von oben in eine in dem Basiskörper vorgesehene Durchgangsöffnung eingesetzt, wodurch sich insbesondere ein einfacher Aufbau des Basiskörpers ergibt.

Bevorzugt ist die Messanordnung dadurch gekennzeichnet, dass sich eine Kontaktfläche der Ultraschallsonde im Wesentlichen parallel und in geringem Abstand zur Basiskörperauflagefläche erstreckt, wobei der Abstand insbesondere weniger als 1 mm beträgt, und dass die Basiskörperauflagefläche bevorzugt eine die Kontaktfläche der Ultraschallsonde ringförmig umgebende Kontaktmittelaufnahmevertiefung aufweist, die über einen sich durch den Basiskörper erstreckenden Kontaktmittelkanal mit einer Kontaktmittelzuführöffnung des Basiskörpers verbunden ist, wobei die Tiefe der Kontaktmittelaufnahmevertiefung insbesondere weniger als 1 mm beträgt. Dank der Tatsache, dass die Kontaktfläche der Ultraschallsonde bezogen auf die Basiskörperauflagefläche nach innen versetzt und von einer ringförmig ausgebildeten Kontaktmittelaufnahmevertiefung umgeben ist, kann gewährleistet werden, dass die Kontaktfläche der Ultraschallsonde während der Durchführung einer Wandstärkenmessung ordnungsgemäß mit dem normalerweise eine gelartige Konsistenz aufweisenden Kontaktmittel benetzt wird, wobei nur ein geringer Kontaktmittelverbrauch zu verzeichnen ist. Mit den angegebenen Größenordnungen des Abstands zwischen der Kontaktfläche der Ultraschallsonde und der Basiskörperauflagefläche und/oder der Tiefe der Kontaktmittelaufnahmevertiefung wurden besonders gute Ergebnisse erzielt.

Vorteilhaft ist an der Basiskörperauflagefläche und/oder an den Flügelelementauflageflächen zumindest ein Magnet angeordnet, bevorzugt jeweils zumindest zwei Magneten, die in der Längsrichtung voneinander beabstandet sind. Dies führt dazu, dass zumindest bei Rohren, die aus einem magnetischen Material hergestellt sind, eine im Wesentlichen automatische Ausrichtung der Basiskörperauflagefläche bzw. der Ultraschallsonde erfolgt, was insbesondere bei Wandstärkenmessungen an schlecht zugänglichen und/oder einsehbaren Rohrabschnitten von großem Vorteil ist.

Bevorzugt sind die Flügelelementauflageflächen jeweils mit einer Vertiefung versehen, die insbesondere länglich ausgebildet ist und sich in der Längsrichtung erstreckt. Dank derartiger Vertiefungen können auch Wandstärken von Rohrabschnitten, die sich in Längsrichtung des Rohrs betrachtet im Bereich von Rohrkrümmungen befinden, ordnungsgemäß erfasst werden. Die Abmessungen der Vertiefung sind vorteilhaft derart auf die an den Rohren vorhandenen Krümmungsradien angepasst, dass stets zumindest eine Zweipunktauflage der Flügelaufnahmeflächen an der Rohroberfläche gewährleistet ist.

Vorteilhaft ist die Höhe des Prüfkopfes in zumindest einer Schwenkstellung der Flügelelemente nicht größer als 10 mm, so dass sich der Prüfkopf auch durch schmale Spalte hindurchbewegen lässt.

Bevorzugt ist an dem Basiskörper eine Haltestange über eine Gelenkverbindung befestigt, wobei die Gelenkverbindung ein relatives Verschwenken des Basiskörpers und der Haltestange um eine sich in der Längsrichtung erstreckende Haltestangenschwenkachse ermöglicht. Mit einer solchen Stange lässt sich der Basiskörper mit den daran gehaltenen Flügelelementen auch an sonst schlecht zugängliche Positionen bewegen.

Die Haltestange und die Gelenkverbindung definieren vorteilhaft Fluidkanäle, die fluidtechnisch miteinander sowie mit einer an dem Basiskörper angeordneten Kontaktmittelzuführöffnung verbunden sind. Entsprechend kann dem Basiskörper bzw. der Basiskörperauflagefläche über die Haltestange, die Gelenkverbindung und die Kontaktmittelzuführöffnung Kontaktmittel zugeführt werden. Erstreckt sich der Fluidkanal der Haltestange durch die gesamte Haltestange, so kann Kontaktmittel beispielsweise zugeführt werden, indem dieses unter Verwendung einer Spritze in das freie Ende der Haltestange eingespritzt wird.

Ferner schafft die vorliegende Erfindung ein Verfahren zum Erfassen der Wandstärke eines Rohrs unter Verwendung einer erfindungsgemäßen Messanordnung der zuvor beschriebenen Art, wobei es sich bei dem Rohr insbesondere um ein Rohr eines Abhitzedampferzeugers einer Dampfturbine handelt.

Weitere Merkmale und Vorteile der vorliegenden Erfindung werden anhand der nachfolgenden Beschreibung einer Ausführungsform einer erfindungsgemäßen Messanordnung unter Bezugnahme auf die beiliegende Zeichnung deutlich. Darin ist
- Figur 1: eine perspektivische Ansicht eines Prüfkopfes einer Messanordnung gemäß einer ersten Ausführungsform der vorliegenden Erfindung, wobei sich Flügelelemente des Prüfkopfes in einer ersten Schwenkstellung befinden;
- Figur 2: eine perspektivische Teilansicht des in Figur 1 gezeigten Prüfkopfes, wobei sich die Flügelelemente in einer zweiten Schwenkstellung befinden;

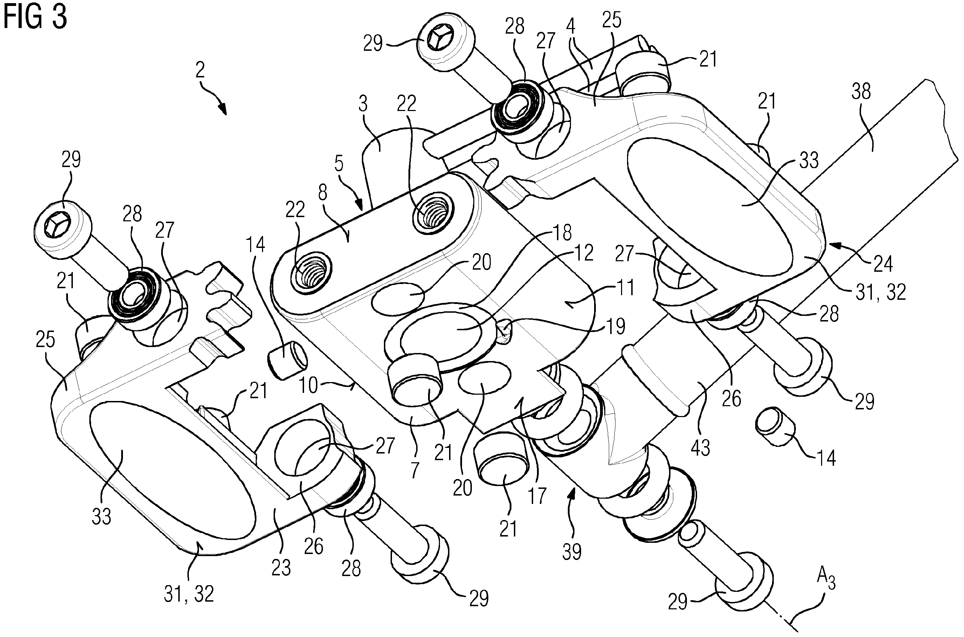

- Figur 3: eine perspektivische Explosionsansicht des in Figur 1 gezeigten Prüfkopfes von unten;

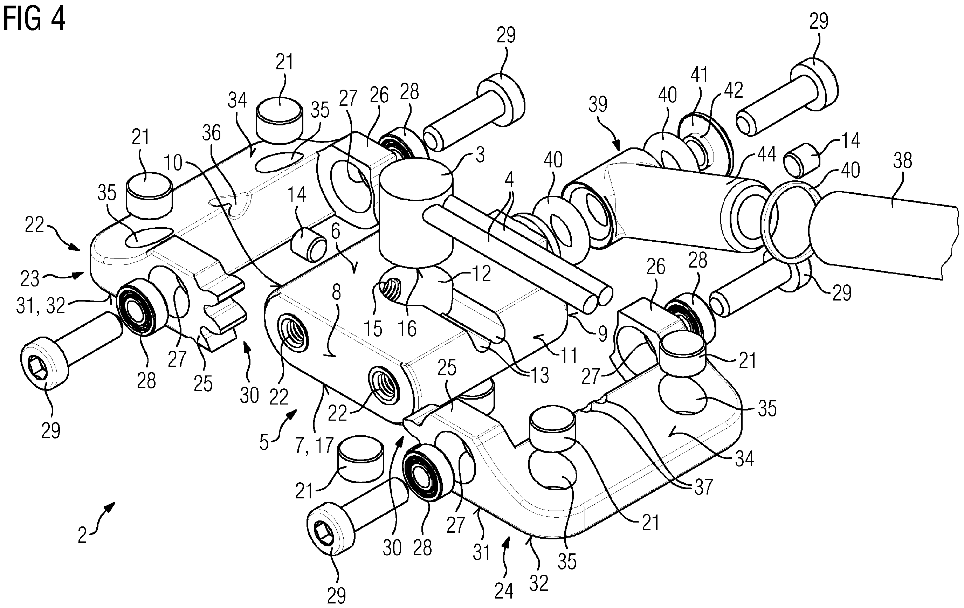

- Figur 4: eine perspektivische Explosionsansicht des in Figur 1 gezeigten Prüfkopfes von oben;

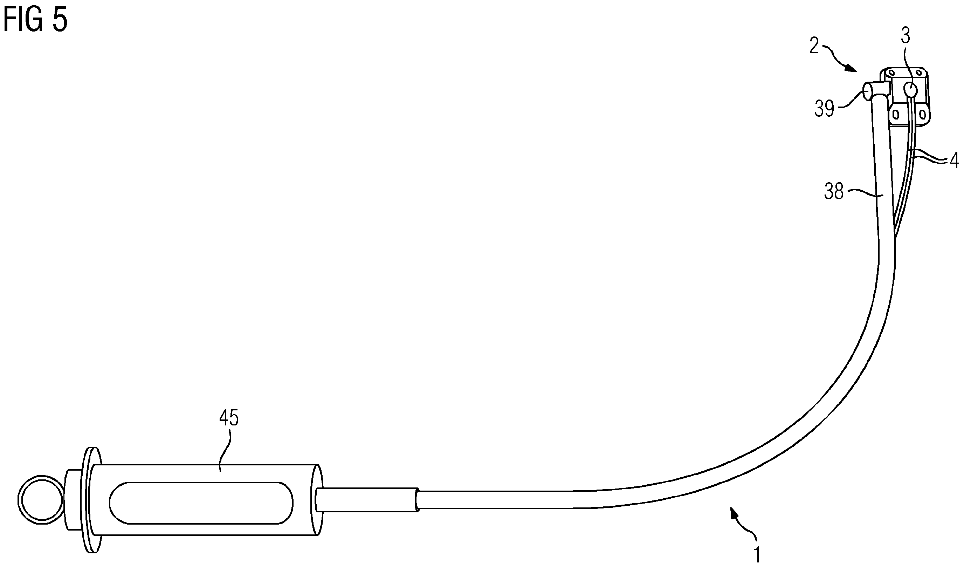

- Figur 5: eine Draufsicht der gesamten Messanordnung und

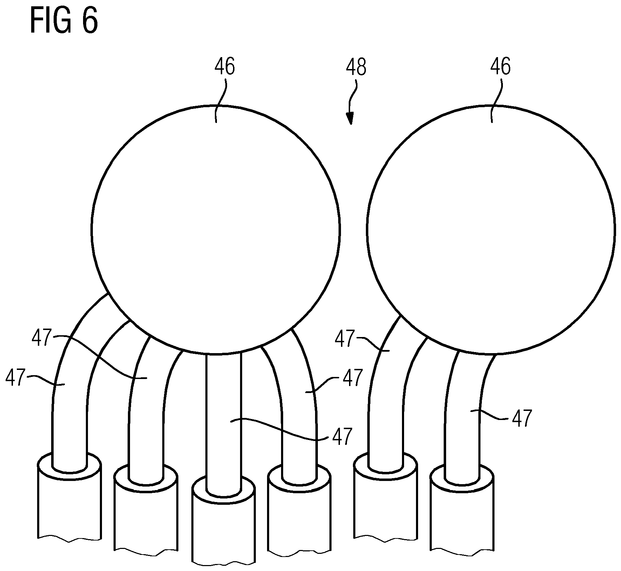

- Figur 6: eine schematische Vorderansicht, die Bereiche eines Abhitzedampferzeugers einer Dampfturbine zeigt.

Die Figuren 1 bis 5 zeigen eine Messanordnung 1 gemäß einer Ausführungsform der vorliegenden Erfindung bzw. Komponenten derselben. Die Messanordnung 1 umfasst einen Prüfkopf 2 mit einer Ultraschallsonde 3, die vorliegend ein im Wesentlichen zylindrisches Gehäuse aufweist, aus dessen Mantelfläche im oberen Bereich die zugehörigen Kabel 4 herausgeführt sind. Ferner umfasst Prüfkopf 2 einen die Ultraschallsonde 2 aufnehmenden Basiskörper 5, der im Wesentlichen quaderförmig ausgebildet ist und sich in einer Längsrichtung L erstreckt. Der Basiskörper 5 umfasst eine Oberseite 6, eine Unterseite 7, einander gegenüberliegende Stirnseiten 8 und 9 sowie einander gegenüberliegende Längsseiten 10 und 11, die im Querschnitt betrachtet mit einer gleichmäßigen Rundung versehen sind. Im Wesentlichen mittig erstreckt sich von der Oberseite 6 zur Unterseite 7 eine zylindrische Durchgangsöffnung 12, in die von oben betrachtet Kabelaufnahmenuten 13 münden, die sich ausgehend von der Längsseite 11 in Richtung der Durchgangsöffnung 12 erstrecken. In die Durchgangsöffnung 12 und die Kabelaufnahmenuten 13 ist die Ultraschallsonde 3 mit den daran gehaltenen Kabeln 4 von oben eingesetzt und über eine Madenschraube 14 fixiert, die in eine Gewindedurchgangsbohrung 15 geschraubt ist, die sich ausgehend von der Längsseite 10 zur Durchgangsöffnung 12 erstreckt. Die Ultraschallsonde 3 ist innerhalb der Durchgangsöffnung 12 derart positioniert, dass sich ihre Kontaktfläche 16 im Wesentlichen parallel und in engem Abstand zu einer Basiskörperauflagefläche 17 erstreckt, die durch die Unterseite 7 des Basiskörpers 5 definiert ist. Der Abstand entspricht vorliegend der Tiefe einer die Durchgangsöffnung 12 und damit die darin eingesetzte Ultraschallsonde 3 ringförmig umgebenden Kontaktmittelaufnahmevertiefung 18, wobei der Abstand bzw. die Tiefe weniger als 1 mm beträgt. In die Kontaktmittelvertiefung 18 mündet umfangsseitig ein sich durch den Basiskörper 5 erstreckender Kontaktmittelkanal 19, der in etwa mittig an der Stirnseite 9 des Basiskörpers 5 austritt, wo er eine nicht näher dargestellte Kontaktmittelzuführöffnung bildet. An der Basiskörperauflagefläche 17 sind beidseitig der Kontaktmittelvertiefung 18 und mit dieser in Längsrichtung L fluchtend zwei Aufnahmeöffnungen 20 in dem Basiskörper 5 ausgebildet, in denen Magnete 21 eingelassen und befestigt sind, vorliegend unter Verwendung eines Klebstoffes. An den Stirnseiten 8 und 9 sind jeweils zwei Gewindebohrungen 22 vorgesehen, die in Längsrichtung L miteinander fluchtend angeordnet sind.

Der Prüfkopf 2 umfasst ferner zwei Flügelelemente 23 und 24, die schwenkbar an dem Basiskörper 5 gehalten sind und sich entlang der Längsseiten 10 und 11 des Basiskörpers 5 erstrecken. Die Flügelelemente 23 und 24 weisen einen im Wesentlichen spiegelsymmetrischen Aufbau auf und umfassen jeweils zwei Schwenkarme 25 und 26, welche die Stirnseiten 8 und 9 des Basiskörpers 5 umgreifen, wobei jeder Schwenkarm 25, 26 mit einer Durchgangsbohrung 27 versehen ist, die mit einer der Gewindebohrungen 22 fluchtet, die in den Stirnseiten 7, 8 des Basiskörpers 4 vorgesehen sind. In die Durchgangsbohrung 27 sind jeweils Kugellager 28 eingesetzt, die von Befestigungsschrauben 29 durchgriffen werden, die wiederum in die Gewindebohrungen 22 des Basiskörpers 5 eingeschraubt sind. Somit sind die Flügelelemente 23 und 24 schwenkbar um sich parallel zueinander und in Längsrichtung L erstreckende Schwenkachsen A₁ und A₂ gehalten, die sich mittig durch die stirnseitig einander gegenüberliegenden Gewindebohrungen 22 des Basiskörpers 5 erstrecken. Die Schwenkarme 25 der Flügelelemente 23 und 24 sind jeweils über Synchronisierungsmittel 30, vorliegend in Form ineinandergreifender Synchronverzahnungen miteinander verbunden, was dazu führt, dass Schwenkbewegungen der Flügelelemente 23 und 24 um ihre Schwenkachsen A₁ und A₂ jeweils synchron erfolgen. Die Flügelelemente 23 und 24 definieren an ihren Unterseiten 31 jeweils Flügelelementauflageflächen 32. Vorliegend sind die Flügelelementauflageflächen 32 jeweils mit einer Vertiefung 33 versehen, die länglich ausgebildet ist, sich in der Längsrichtung L erstreckt und eine ovale Form aufweist. Grundsätzlich sind allerdings auch andere Vertiefungsformen möglich. An der Oberseite 34 jedes Flügelelementes 23, 24 sind zwei Aufnahmeöffnungen 35 ausgebildet, die kurz vor der Unterseite 31 der Flügelelemente 23, 24 enden, wobei die Aufnahmeöffnung 35 in Längsrichtung L im Wesentlichen auf einer Linie angeordnet sind. In den Aufnahmeöffnungen 35 sind Magneten 21 eingelassen und befestigt, vorliegend unter Verwendung eines Klebstoffes. An der Oberseite 34 des Flügelelementes 23, das der Madenschraube 13 zugewandt ist, ist ferner eine Madenschraubenzugangsnut 36 ausgebildet, die derart positioniert ist, dass sie den Zugang zur Madenschraube 14 ermöglicht. An der Oberseite 34 des anderen Flügelelementes 24 sind Nuten 37 ausgebildet, die mit den Kabelaufnahmenuten 13 des Basiskörpers 5 fluchten.

Die Messanordnung 1 umfasst ferner eine hohl ausgebildete Haltestange 38, die über eine Gelenkverbindung 39 an der Stirnseite 9 des Basiskörpers 5 befestigt ist, wobei die Gelenkverbindung 39 ein relatives Verschwenken des Basiskörpers 5 und der Haltestange 38 um eine sich in der Längsrichtung L erstreckende Haltestangenschwenkachse A₃ ermöglicht. Die Gelenkverbindung 39 ist vorliegend als T-Rohr ausgebildet und unter Verwendung zweier Dichtringe 40, einer Abdeckkappe 41, die nach Art einer Unterlegscheibe ausgebildet ist und entlang ihres Innenumfangs einen einseitig vorstehenden Bund 42 aufweist, und einer Befestigungsschraube 39 an dem Basiskörper 5 befestigt, die in eine nicht dargestellte, an der Stirnseite 8 des Basiskörpers 4 ausgebildete Gewindebohrung geschraubt ist. Die durch den Kontaktmittelkanal 19 an der Stirnseite 9 des Basiskörpers 5 gebildete Kontaktmittelzuführöffnung befindet sich dabei zwischen der Gewindebohrung und dem benachbart angeordneten Dichtring 40, so dass Kontaktmittel durch die hohl ausgebildete Haltestange 38, die Gelenkverbindung 39 und den Kontaktmittelkanal 19 in die Kontaktmittelaufnahmevertiefung 18 gelangen kann. Die Haltestange 38 ist über einen Stutzen 43 der Gelenkverbindung 39 geschoben, wobei ein weiterer Dichtring 40 zwischen einem den Stutzen 43 begrenzenden Ringanschlag 44 und der Haltestange 38 angeordnet ist. die Befestigung der Haltestange 38 an dem Stutzen 43 ist über eine Madenschraube 14 realisiert.

Die Abmessungen des Basiskörpers 5 und der Flügelelemente 23, 24 sind vorliegend derart gewählt, dass die maximale Höhe H des Prüfkopfes 2 in zumindest einer Schwenkstellung der Flügelelemente 23 und 24, die vorliegend in Figur 1 gezeigt ist, nicht mehr als 10 mm beträgt. Gleiches gilt für die Abmessungen der Gelenkverbindung 39 ebenso wie für den Durchmesser D der Haltestange 38, so dass diese nicht über den Prüfkopf 2 vorstehen, wenn die Haltestange 38 in Figur 1 parallel zu dem Basiskörper 5 und den Flügelelementen 23, 24 angeordnet wird.

Am freien Ende der Haltestange 38 ist vorliegend lösbar eine Spritze 45 befestigt, die als Kontaktmittelreservoir- und -zuführeinrichtung dient.

Die Figur 6 zeigt zwei Sammler 46 eines Abhitzedampferzeugers einer Dampfturbine, an die eine Vielzahl von Rohren 47 angeschlossen ist. Die Rohre 47 sind einer starken Korrosion ausgesetzt, weshalb es erforderlich ist, in regelmäßigen Abständen die Wandstärken der Rohre 47 zu prüfen, um die Gefahr von Leckagen zu verringern. Ein Problem bei der Erfassung der Wandstärken der Rohre 47 besteht im vorliegenden Fall darin, dass die Rohre 47 nur über den zwischen den Sammlern 46 vorhandenen, nur etwa 11 mm breiten Spalt 48 zu erreichen sind, was zu einer sehr schlechten Zugänglichkeit führt. Damit einhergehend besteht das Problem, dass die Rohre 47 schlecht einsehbar sind.

Zur Durchführung einer Wandstärkenmessung eines oder mehrerer der Rohre 47 wird der Prüfkopf 2 unter Verwendung der Haltestange 38 zunächst in den Spalt 48 eingeführt, was aufgrund der geringen Höhe des Prüfkopfes 2 problemlos möglich ist, und bis zu einem der Rohre 47 vorgeschoben. Anschließend wird die Unterseite 7 des Basiskörpers 5 im Wesentlichen parallel zu der zu überprüfenden Rohroberfläche ausgerichtet und mit dieser in Kontakt gebracht. Dank der Magneten 21 legen sich sowohl die Basiskörperauflagefläche 17 als auch die Flügelelementauflageflächen 32 automatisch an der Oberfläche des magnetischen Rohrs 47 an, wobei die Basiskörperauflagefläche 17 und die Flügelelementauflageflächen 32 aufgrund der synchronen Schwenkbewegung der Flügelelemente 23 und 24 automatisch in eine zur Durchführung der Wandstärkenmessung optimale Position ausgerichtet werden. Anschließend wird das Kontaktmittel durch Betätigen der Spritze 45 zugeführt, woraufhin in bekannter Weise die Messung erfolgt. Die von der Ultraschallsonde erzeugten Signale werden dann über die Kabel 4 einer nicht näher dargestellten Auswerteeinrichtung zugeführt. Zur Durchführung weiterer Messungen an demselben Rohr 47 kann der Prüfkopf 2 einfach entlang des Rohrs 47 zu den gewünschten Positionen verschoben werden. Im Bereich einer Rohrkrümmung wirken sich die an den Unterseiten 31 der Flügelelemente 23 und 24 vorgesehenen Vertiefungen 33 dahingehend positiv aus, dass aufgrund dieser Vertiefungen 33 stets zumindest ein Zweipunktkontakt zwischen den Flügelelementen 23 und 24 und der Rohroberfläche gewährleistet ist, solange die Form der Vertiefungen 33 an die maximal vorhandene Krümmung angepasst ist.

Dank der erfindungsgemäßen Messanordnung ist es zusammenfassend möglich, auch die Wandstärken schlecht zugänglicher und/oder einsehbarer Rohrabschnitte problemlos zu erfassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Messanordnung (1) zum Erfassen der Wandstärke eines Rohrs (47), umfassend einen Prüfkopf (2) mit einer Ultraschallsonde (3) und einem die Ultraschallsonde (3) aufnehmenden Basiskörper (5), der an seiner Unterseite (7) eine Basiskörperauflagefläche (17) definiert, **dadurch gekennzeichnet, dass**
der Prüfkopf (2) zwei Flügelelemente (23, 24) aufweist, die an ihren Unterseiten (31) jeweils eine Flügelelementauflagefläche (32) definieren und an dem Basiskörper (5) derart schwenkbar um sich im Wesentlichen parallel zueinander und in einer Längsrichtung (L) erstreckende Schwenkachsen (A₁, A₂) gehalten sind, dass die Flügelelementauflageflächen (32) aufeinander zu und voneinander weg bewegt werden können, **dadurch gekennzeichnet, dass** die Flügelelemente (23, 24) derart über Synchronisierungsmittel (30), insbesondere in Form ineinander greifender Synchronverzahnungen miteinander verbunden sind, dass ihre Schwenkbewegungen um die zugehörigen Schwenkachsen (A₁, A₂) synchron erfolgen.

2. Messanordnung (1) nach Anspruch 1,
**dadurch gekennzeichnet, dass**
die Ultraschallsonde (3) von oben in eine in dem Basiskörper (5) vorgesehene Durchgangsöffnung (12) eingesetzt ist.

3. Messanordnung (1) nach Anspruch 1 oder 2,
**dadurch gekennzeichnet, dass**
sich eine Kontaktfläche (16) der Ultraschallsonde (3) im Wesentlichen parallel und in geringem Abstand zur Basiskörperauflagefläche (17) erstreckt,
wobei der Abstand insbesondere weniger als 1 mm beträgt, und
dass die Basiskörperauflagefläche (17) bevorzugt einen die Kontaktfläche (16) der Ultraschallsonde (3) ringförmig umgebende Kontaktmittelaufnahmevertiefung (18) aufweist, die über einen sich durch den Basiskörper (5) erstreckenden Kontaktmittelkanal (19) mit einer Kontaktmittelzuführöffnung des Basiskörpers (5) verbunden ist,
wobei die Tiefe der Kontaktmittelaufnahmevertiefung (18) insbesondere weniger als 1 mm beträgt.

4. Messanordnung (1) nach einem der vorhergehenden Ansprüche,
**dadurch gekennzeichnet, dass**
an der Basiskörperauflagefläche (17) und/oder an den Flügelelementauflageflächen (32) zumindest ein Magnet (21) angeordnet ist,
bevorzugt jeweils zumindest zwei Magneten (21), die in der Längsrichtung voneinander beabstandet sind.

5. Messanordnung (1) nach einem der vorhergehenden Ansprüche,
**dadurch gekennzeichnet, dass**
die Flügelelementauflageflächen (32) jeweils mit einer Vertiefung (33) versehen sind, die insbesondere länglich ausgebildet ist und sich in der Längsrichtung (L) erstreckt.

6. Messanordnung (1) nach einem der vorhergehenden Ansprüche,
**dadurch gekennzeichnet, dass**
die Höhe (H) des Prüfkopfes (2) in zumindest einer Schwenkstellung der Flügelelemente nicht größer als 10 mm ist.

7. Messanordnung (1) nach einem der vorhergehenden Ansprüche,
**dadurch gekennzeichnet, dass**
an dem Basiskörper (5) eine Haltestange (38) über eine Gelenkverbindung (39) befestigt ist,
wobei die Gelenkverbindung (39) ein relatives Verschwenken des Basiskörpers (5) und der Haltestange (38) um eine sich in der Längsrichtung (L) erstreckende Haltestangenschwenkachse (A₃) ermöglicht.

8. Messanordnung (1) nach Anspruch 3 und 7,
**dadurch gekennzeichnet, dass**
die Haltestange (38) und die Gelenkverbindung (39) Fluidkanäle definieren, die fluidtechnisch miteinander sowie mit der Kontaktmittelzuführöffnung verbunden sind.

9. Verfahren zum Erfassen der Wandstärke eines Rohrs (47) unter Verwendung einer Messanordnung (1) nach einem der vorhergehenden Ansprüche,
wobei es sich bei dem Rohr (47) insbesondere um ein Rohr eines Abhitzedampferzeugers einer Dampfturbine handelt.

## Claims

1. Measuring arrangement (1) for detecting the wall thickness of a pipe (47),
comprising a testing head (2) having an ultrasound probe (3) and having a main body (5) which receives the ultrasound probe (3) and which, on its underside (7), defines a main body support surface (17),
**characterized in that**
the testing head (2) has two wing elements (23, 24) which, on their undersides (31), define in each case one wing element support surface (32) and which are held on the main body (5) so as to be pivotable about pivot axes (A₁, A₂), extending substantially parallel to one another and in a longitudinal direction (L), such that the wing element support surfaces (32) can be moved towards one another and away from one another, **characterized in that**
the wing elements (23, 24) are connected to one another via synchronization means (30), in particular in the form of synchronization toothings which mesh into one another, such that their pivoting movements about the associated pivot axes (A₁, A₂) are realized synchronously.

2. Measuring arrangement (1) according to Claim 1,
**characterized in that**
the ultrasound probe (3) is inserted from above into a passage opening (12) provided in the main body (5).

3. Measuring arrangement (1) according to Claim 1 or 2,
**characterized in that**
a contact surface (16) of the ultrasound probe (3) extends substantially parallel and with a small spacing to the main body support surface (17),
wherein the spacing is in particular less than 1 mm in size, and
**in that** the main body support surface (17) preferably has a contact medium-receiving depression (18) which annularly surrounds the contact surface (16) of the ultrasound probe (3) and which is connected to a contact medium supply opening of the main body (5) via a contact medium channel (19) which extends through the main body (5),
wherein the depth of the contact medium-receiving depression (18) is in particular less than 1 mm.

4. Measuring arrangement (1) according to one of the preceding claims,
**characterized in that**,
on the main body support surface (17) and/or on the wing element support surfaces (32), there is arranged at least one magnet (21),
preferably in each case at least two magnets (21), which are spaced apart from one another in the longitudinal direction.

5. Measuring arrangement (1) according to one of the preceding claims,
**characterized in that**
the wing element support surfaces (32) are each provided with a depression (33) which is in particular of elongate form and extends in the longitudinal direction (L).

6. Measuring arrangement (1) according to one of the preceding claims,
**characterized in that**,
in at least one pivoting position of the wing elements, the height (H) of the testing head (2) is not greater than 10 mm.

7. Measuring arrangement (1) according to one of the preceding claims,
**characterized in that**
a holding rod (38) is fastened to the main body (5) via an articulated connection (39),
wherein the articulated connection (39) makes possible a relative pivoting of the main body (5) and the holding rod (38) about a holding rod pivot axis (A₃) extending in the longitudinal direction (L).

8. Measuring arrangement (1) according to Claims 3 and 7,
**characterized in that**
the holding rod (38) and the articulated connection (39) define fluid channels which are fluidically connected to one another and to the contact medium supply opening.

9. Method for detecting the wall thickness of a pipe (47) using a measuring arrangement (1) according to one of the preceding claims,
wherein the pipe (47) is in particular a pipe of a heat recovery steam generator of a steam turbine.

## Revendications

1. Système (1) de mesure pour détecter l'épaisseur de paroi d'un tube (47),
comprenant une tête (2) de contrôle ayant une sonde (3) à ultrasons et une pièce (5) de base, qui reçoit la sonde (3) à ultrasons et qui définit, sur son côté (7) inférieur, une surface (17) d'application de la pièce de base,
**caractérisé en ce que**
la tête (2) de contrôle a deux éléments (23, 24) d'aile, qui définissent, chacun sur leur côté (31) inférieur, une surface (32) d'application des éléments d'aile et qui sont retenus pivotant sur la pièce (5) de base autour d'axes (A₁, A₂) de pivotement s'étendant sensiblement parallèlement l'un à l'autre et dans une direction (L) longitudinale, de manière à pouvoir rapprocher et éloigner l'une de l'autre les surfaces (32) d'application des éléments d'aile,
**caractérisé en ce que**
les éléments (23, 24) d'aile sont reliés l'un à l'autre par des moyens (30) de synchronisation, notamment sous la forme de dentures de synchronisation engrenant l'une dans l'autre, de manière à ce que leurs mouvements de pivotement autour des axes (A₁, A₂) de pivotement associés se produisent de manière synchrone.

2. Système (1) de mesure suivant la revendication 1,
**caractérisé en ce que**
la sonde (3) à ultrasons est insérée par le haut dans une ouverture (12) traversante prévue dans la pièce (5) de la base.

3. Système (1) de mesure suivant la revendication 1 ou 2,
**caractérisé en ce qu'**
une surface (16) de contact de la sonde (3) à ultrasons s'étend sensiblement parallèlement et à faible distance de la surface (17) d'application de la pièce de base,
la distance étant notamment plus petite que 1 mm, et
**en ce que** la surface (17) d'application de la pièce de base a de préférence une cavité (18) de réception de fluide de contact entourant annulairement la surface (16) de contact de la sonde (3) à ultrasons et reliée à une ouverture d'amenée de fluide de contact de la pièce (5) de base par un conduit (19) pour du fluide de contact s'étendant dans la pièce (5) de base,
la profondeur de la cavité (18) de réception du fluide de contact étant notamment plus petite que 1 mm.

4. Système (1) de mesure suivant l'une des revendications précédentes,
**caractérisé en ce que**
au moins un aimant (21) est disposé sur la surface (17) d'application de la pièce de base et/ou sur les surfaces (32) d'application des éléments d'aile,
en prévoyant de préférence, respectivement, au moins deux aimants (21), qui sont à distance l'un de l'autre dans la direction longitudinale.

5. Système (1) de mesure suivant l'une des revendications précédentes,
**caractérisé en ce que**
les surfaces (32) d'application des éléments d'aile sont pourvues chacune d'une cavité (33), qui est notamment oblongue et s'étend dans la direction (L) longitudinale.

6. Système (1) de mesure suivant l'une des revendications précédentes,
**caractérisé en ce que**
la hauteur (H) de la tête (2) de contrôle, dans au moins une position de pivotement des éléments d'aile, n'est pas plus grande que 10 mm.

7. Système (1) de mesure suivant l'une des revendications précédentes,
**caractérisé en ce qu'**
une barre (38) de retenue est fixée à la pièce (5) de base par une liaison (39) articulée,
la liaison (39) articulée rendant possible un pivotement relatif de la pièce (5) de base et de la barre (38) de retenue autour d'un axe (A₃) de pivotement de barre de retenue s'étendant dans la direction (L) longitudinale.

8. Système (1) de mesure suivant la revendication 3 et 7,
**caractérisé en ce que**
la barre (38) de retenue et la liaison (39) articulée définissent des conduits pour du fluide, qui communiquent fluidiquement l'un avec l'autre, ainsi qu'avec l'ouverture d'apport d'un fluide de contact.

9. Procédé de détection de l'épaisseur de paroi d'un tube (47) en utilisant un système (1) de mesure suivant l'une des revendications précédentes,
dans lequel le tube (47) est notamment un tube d'un générateur de vapeur à récupération de la chaleur perdue d'une turbine à vapeur.
